# EUROPÄISCHE PATENTSCHRIFT

(11) **EP 3 987 936 B1**
(45) Veröffentlichungstag und Bekanntmachung des Hinweises auf die Patenterteilung: **01.05.2024**
(21) Anmeldenummer: 21199671.5
(22) Anmeldetag: 29.09.2021
(51) Int. Cl.: A21C 9/08, A21C 11/10, A21B 5/02

(54) **VERFAHREN UND VORRICHTUNG ZUM FORMEN VON TEIG**
METHOD AND DEVICE FOR FORMING OF DOUGH
PROCÉDÉ ET DISPOSITIF PERMETTANT DE FORMER DE LA PÂTE

(30) Priorität: 22.10.2020 DE 102020127812
(43) Veröffentlichungstag der Anmeldung: 27.04.2022
(73) Patentinhaber: Schäfer, Helmut, 72070 Tübingen (DE)
(72) Erfinder: Schäfer, Helmut, 72070 Tübingen (DE)
(74) Vertreter: Witte, Weller & Partner Patentanwälte mbB

(56) Entgegenhaltungen:
- EP-B1- 0 008 988
- DE-A1- 3 800 906
- DE-A1-102015 217 894
- FR-A1- 2 575 366
- JP-A- H11 137 231
- JP-B2- 3 451 479
- US-A- 5 409 363

## Beschreibung

Die Erfindung betrifft ein Verfahren zum Herstellen eines essbaren schalenförmigen rohen Teigprodukts mit einem Boden und einem Rand sowie eine Teigformmaschine.

Aus der FR 2 575 366 A1 ist eine Vorrichtung zum Formen und Schneiden von Törtchen bekannt, mit einer Basis, einer Platte, die von der Basis getragen wird und eine Vielzahl von beabstandeten Vertiefungen aufweist, einer oberen Platte, die über der Basis angebracht ist, mehreren Schneide- und Ausstechmitteln, die an der oberen Platte jeweils in Übereinstimmung mit den Vertiefungen angeordnet und relativ zu diesen beweglich sind, wobei die von der Basis getragene Platte eine abnehmbare Platte aus einem feuerfesten Material ist, und wobei die Vertiefungen einen offenen Boden aufweisen.

Aus der JP H11 137231 A ist eine Maschine zum Formen von Teig bekannt, wobei der Teig zur Aufnahme und Umhüllung weiterer Zutaten dient. Die Teigformmaschine weist eine Luftkammer mit einer oberen Öffnung auf, die durch flachen Teig verschlossen wird. Das Innere der Luftkammer ist teilweise perforiert, so dass ein Unterdruck angelegt werden kann, woraufhin der flache Teig in die Luftkammer gesaugt wird.

Aus der DE 38 00 906 A1 sind ein Verfahren und eine Vorrichtung zur Herstellung von mit Früchten oder Fruchtstücken gefüllten Knödeln bekannt. Für die Umhüllung wird ein flaches Teigstück gebildet, auf dieses wird die Füllung gelegt und dann wird der die Umhüllung bildende Teil des Teigs um die Füllung gelegt und überschüssiger Teig abgetrennt. Die Herstellung erfolgt in einer Form, die einen ersten und einen zweiten Becherkörper aufweist, die jeweils einen halbkugelförmigen Innenraum aufweisen, so dass sich insgesamt ein kugelförmiger Innenraum ergibt. Die Becherkörper weisen Anschlüsse zur Verbindung des Innenraums mit einer Unterdruckquelle, einer Überdruckquelle oder zur Umgebung auf.

Aus der EP 0 008 988 B1 sind ein Verfahren und eine Vorrichtung zur Herstellung von Gebäck bekannt, mit einer Gebäckplatte, die eine Vielzahl von gleichmäßig verteilten Formen aufweist, integrierten Schneidmitteln zum Schneiden eines Teigabschnittes zur Vereinzelung des Teigs, und mit einem Stempel, der den Teig in die Vielzahl von Formen drückt, wobei dies auch ein Scheiden mit den Schneidmitteln umfasst.

Im Bäckerei- und besonders im Konditorbereich gibt es viele Gebäcke, die in pastetenartigen, gebackenen Schalen hergestellt werden und anschließend gebacken werden. Bei der Herstellung insbesondere von Törtchen (Tartlettes), kleinen Kuchen aber auch in der Größe von Tortenböden ist es erforderlich, den Teig in Handarbeit in die entsprechende Form einzubringen. Bisher werden diese Schalen von Hand mit ausgestochenen, runden Teigscheiben, die in die Backformen eingelegt und von Hand angepresst werden, hergestellt. Für größere Stückzahlen sind auch Pressen bekannt. Dabei wird ein vor portioniertes Teigstück in die Backform gelegt und ein Stempel, der die Positivform der Backform hat, presst den Teig aus, so das er bis zur Oberkannte der Backform fließt. Es existieren auch Karussellpressen, die mit mehreren Aufnahmen für die Backformen ausgerüstet sind. Die Aufnahmen drehen sich um eine Achse unter den Pressstempel. Dadurch kann laufend beschickt und entnommen werden.

Der vorliegenden Erfindung liegt daher die Aufgabe zugrunde, ein Verfahren und eine Vorrichtung vorzuschlagen, mit der derartige schalenförmige Teigprodukte schneller und einfacher für das anschließende Backen vorbereitet werden können.

Diese Aufgabe wird erfindungsgemäß durch ein Verfahren nach Anspruch 1 sowie eine Teigformmaschine nach Anspruch 6 gelöst. Weitere vorteilhafte Ausgestaltungen sind den jeweiligen rückbezogenen Unteransprüchen zu entnehmen.

Gemäß der Erfindung wird eine flache Teigmasse geeigneter Konsistenz und Dicke, die luftundurchlässig und elastisch verformbar ist, über eine Backform mindestens einer der Form des schalenförmigen Teigprodukts entsprechenden Vertiefung mit am Boden befindlichen Luftdurchlässe gelegt, wobei mindestens eine Vertiefung weitgehend von oben Luftdicht abgeschlossen wird. Die dazu verwendete Teigmasse deckt somit die Backform mit einer gewissen Dicke des Teiges ab, so dass mittels einer Saugpumpe die Teigmasse in die mindestens eine Vertiefung gesaugt werden kann, wobei die Teigmasse formschlüssig in die Backform gezogen wird. Die unter der Teigmasse in der Vertiefung befindliche Luft wird durch die am Boden der Vertiefung befindliche Luftdurchlässe abgesaugt, wobei die Luftdurchlässe so klein sind, dass sie durch die angesaugte Teigmasse verschlossen werden. Die Luftdurchlässe sind in der Vertiefung so angeordnet, dass die Teigmasse vorständig gegen den Boden und den Rand der Vertiefung gesaugt werden. Dazu sind die Luftdurchlässe an der tiefsten Stelle und den Stellen angeordnet, die die Teigmasse beim Einziehen zuletzt erreicht. Die Luftdurchlässe sind daher zumindest randnah im Boden und/oder am Übergang von Boden zu Rand anzuordnen. Die Luftdurchlässe liegen vorzugsweise in einem Bereich von 0,1 bis 1 mm. Die jeweilige Vertiefung ist somit in kürzester Zeit mit der Teigmasse in wenigen Sekunden befüllt. Vorzugsweise wird der Saugvorgang weiter aufrechterhalten, um der elastischen Teigmasse die Möglichkeit zu geben, sich auszudehnen (zu entspannen) und in die Vertiefung nachzurutschen bis die Teigmasse stabil in der Vertiefung einliegt. Andernfalls kann es passieren, dass bei die Teigmasse sich wieder vom Boden der Vertiefung entfernt. Der Saugvorgang kann bis nach dem Ausstechen der Teigmasse aufrechterhalten bleiben. Anschließend wird die überschüssige Teigmasse entfernt, nachdem diese von dem in der Vertiefung befindlichen Teigmasse am Rand ausgestochen und damit getrennt wurde. Anschließend kann die Backform zur Weiterverarbeitung in einem Backofen entnommen werden. Bei der Backform kann es sich entweder um beispielsweise eine Backform aus Metall, wie zum Beispiel eine Tortenbodenform oder eine ähnliche diese Größe (und auch kleiner Größen) aufweisende Backform, oder auch um eine elastische, hitzebeständige Backform mit einer oder einer Vielzahl von Vertiefungen handeln. Letztere sind häufig aus Silikon hergestellt. Die Erfindung ist nicht nur auf die eingangs beschriebenen Formen mit im wesentlichen flachen Boden beschränkt. Sie kann auch bei anderen schalenförmigen Teigprodukten mit einem beispielsweise eine oder mehrere Wölbungen aufweisenden Boden und damit unterschiedliche lokal tiefste Stellen verwendet werden. Bei diesen Backformen kann der Übergang vom Boden zum Rand fließend und nicht wie bei den vorstehend erwähnten Törtchen- oder Tortenformen abrupt erfolgen, so dass es an einem ausgeprägten randnahen Bereich mangelt. In diesem Fall gilt einerseits weiterhin, die Luftdurchlässe an den lokal tiefsten Stellen und je nach Form gegebenenfalls darüber hinaus in den Randbereichen oder am Rand vorzusehen, um sicherzustellen, dass die Teigmasse vollflächig an der Backform anliegt.

Bei dem erfindungsgemäßen Verfahren wird eine Formplatte mit mindestens einer Vertiefung, deren Form dem herzustellenden Teigprodukt entspricht, verwendet. Diese dient der Aufnahme der Backform und ist über die mindestens eine Vertiefung am Boden und/oder am Rand des Bodens über Bohrungen mit einer Saugpumpe verbunden. Auch hier ist erforderlich, dass die Bohrungen in der Vertiefung so angeordnet sind, dass die Teigmasse vollständig gegen den Boden und den Rand der Vertiefung gesaugt werden. Dazu sind die Bohrungen an der tiefsten Stelle und den Stellen angeordnet, die die Teigmasse beim Einziehen zuletzt erreicht.

Gemäß einer bevorzugten Ausbildung des Verfahrens wird als Backform ein elastisches backfestes Material mit schlitzförmigen oder sternförmigen Luftdurchlässe verwendet, durch die die Luft aus der Vertiefung abgesaugt wird, wenn diese mit der Teigmasse verschlossen ist.

Die Luftdurchlässe sind so klein, dass sie, wenn die Teigmasse angesaugt ist, durch diese verschlossen werden. Damit die Luft zwischen dem Boden der Vertiefung in der Backform und dem Boden der Vertiefung in der Formplatte zu den Bohrungen in der Formplatte bzw. den Luftdurchlässe in der Backform strömen und den Raum zwischen dem Boden der Vertiefung und der darüber liegenden Teigmasse in der Backform evakuieren kann, ist es vorteilhaft, wenn dieser Bereich Unebenheiten aufweist, beispielsweise durch eine raue Oberfläche auf der Formplatte oder der Unterseite der Backform.

Je nach Überdeckung der Formplatte kann es passieren, dass die Saugpumpe an einer oder mehreren Stellen an dem Teig vorbei Luft ansaugt. Um dies zu verhindern, kann gemäß einer weiteren bevorzugten Ausbildung des Verfahrens nach dem Aufbringen der Teigmasse eine luftdichte Folie über die Teigmasse und darüber hinaus gelegt und nach der Verformung wieder entfernt werden. Dadurch wird sichergestellt, dass ein absolut luftdichter Abschluss gegeben ist und der Teig in die Vertiefungen gezogen wird.

Sofern in die mindestens eine Vertiefung der Formplatte eine größere metallische Backform, beispielsweise eine Tortenbodenform, eingelegt wird, ist möglicherweise das Ansaugen von Umgebungsluft durch die Saugpumpe durch den gewellten Rand der Bodenform gegeben. In solch einem Fall ist auf jeden Fall eine luftundurchlässige Folie über die aufgebrachte Teigmasse aufzulegen und nach der Verformung wieder zu entfernen. Auch bei einem glatten Rand der metallischen Backform kann das Ansaugen von Umgebungsluft auftreten, da eine Abdichtung durch die Backform nicht gegeben ist. Dies ist bei einer Backform aus elastischem Material, die üblicherweise größer ist als die Vertiefung und somit den Rand der Vertiefung in der Formplatte abdeckt nicht gegeben. Bei der Verwendung einer Vielzahl von Vertiefungen in der Backform werden die Freiflächen zwischen den einzelnen Vertiefungen in der Formplatte abgedeckt, so dass hier die Gefahr des Ansaugens von Umgebungsluft deutlich reduziert ist. Bei beispielsweise einer Tortenbodenform weist der Boden einen umlaufenden tieferliegenden Rand auf, so dass durch diesen der flache Bereich auf der Boden der Vertiefung in der Formplatte nicht aufliegt. Dies ist insofern bedeutsam, weil die Luft zu den Bohrungen in der Formplatte strömen muss. Aus diesem Grunde sind bei einer Tortenbodenform die Luftdurchlässe in diesem Rand angeordnet und bewirken dadurch die ordnungsgemäße Befüllung der Tortenbodenform mit Teigmasse beim Ansaugen von Luft durch die Saugpumpe wobei die Teigmasse formschlüssig in die Backform gezogen wird. Unabhängig davon gilt bei den metallischen Backformen auch, dass an der tiefsten Stelle und insbesondere am Übergang zwischen Boden und Rand oder möglichst randnah am Boden die Luftdurchlässe angeordnet sind.

Gemäß einer weiteren Ausbildung des Verfahrens wird die in der mindestens einen Vertiefung der jeweiligen Backform befindlichen Teigmasse am Rand um die mindestens eine Vertiefung ausgestochen. Damit wird eine saubere Trennung von der Teigmasse in der Backform und der überschüssigen Teigmasse vorgenommen und sichergestellt, dass die herzustellende Backware immer eine weitgehend gleichmäßige Form am Rand aufweist.

Die erfindungsgemäße Teigformmaschine weist eine Formplatte mit mindestens einer Vertiefung, deren Form dem herzustellenden Teigprodukt entspricht auf, wobei die mindestens eine Vertiefung am Boden und/oder am Bodenrand mindestens eine Bohrung aufweist, die mit einer Saugpumpe verbunden ist. Des Weiteren weist die Teigformmaschine zum Ausstechen eine in vertikaler Richtung bewegliche Ausstecheinrichtung auf, die mindestens einen ringförmigen Ausstechstempel mit umlaufender Schneidkante enthält, dessen Durchmesser größer ist als der Durchmesser der mindestens einen Vertiefung, wobei Ausstechstempel und Vertiefung zueinander zentriert sind, damit der Rand gleichmäßig und zentrisch ist. Die Ausstecheinrichtung kann beispielsweise an vertikalen Führungsstangen oder in einem Rahmen einliegend gegen eine Federkraft nach unten auf die Backform bewegt werden, um mit den Schneidkanten der Ausstechstempel die Teigmassen in der Vertiefung der Backform von der übrigen Teigmasse sauber zu trennen. Dies kann automatisiert (elektrisch, pneumatisch oder hydraulisch) oder per Hand erfolgen. Die erfindunsgemäße Teigformmaschine weist des Weiteren die Saugpumpe und eine Backform mit mindestens einer der Form des Teigprodukts entsprechenden Vertiefung mit am Boden befindlichen Luftdurchlässen auf, wobei die mindestens eine Vertiefung der Formplatte mit der Saugpumpe verbunden ist, und wobei die Backform mit ihren Vertiefungen in die entsprechenden Vertiefungen der Formplatte einlegbar ist.

Gemäß einer Weiterbildung der Teigformfaschine ist die Ausstecheinrichtung horizontal über Linearführungen von einer Beschickungsposition in eine Ausstechposition verfahrbar. Dies kann von Hand oder automatisiert erfolgen. In der Beschickungsposition befindet sich die Aussteckeinrichtung seitlich neben der Formplatte mit der oder den einliegenden Backform/Backformen, so dass diese für das Auflegen der flachen Teigmasse ausreichend frei zugänglich ist.

Vorteilhafterweise weist die Ausstechreinrichtung einen Rahmen auf, in dem eine austauschbare Ausstechplatte mit den Ausstechstempel auf der Unterseite in vertikaler Richtung federnd gelagert ist. Die Ausstechplatte weist auf Ihrer Unterseite die Ausstechstempel auf und liegt beispielsweise an den Ecken in dem Rahmen auf Schraubenfedern auf. Damit kann sie in der Ausstechposition gegen die Kraft der Schraubenfedern auf die darunter befindliche Backform gedrückt und der Teig durchtrennt und somit das rohe Teigprodukt ausgestochen werden. Die Ausstechplatte kann gegen die Federkraft in dem Rahmen geführt auf die Backform gedrückt werden. Um auch eine leichte Querbewegung der Ausstechstempel zur Durchtrennung eines Teigfilms zu ermöglichen, kann in der Ausstechposition die Ausstechplatte leicht quer zu den Führungsstangen bewegt werden. Je nach Anzahl und Größe der Vertiefungen und der auszustechenden Teigprodukte sind auf der Unterseite der Ausstechplatte in entsprechender Anzahl und Form Ausstechstempel angeordnet. Bei einem Wechsel in der Herstellung kann daher einfach durch den Austausch der Ausstechplatte diese auf die geänderten Größen und Formen der herzustellenden Teigprodukte in der Formplatte angepasst werden.

Zweckmäßigerweise liegt gemäß einer Weiterbildung der erfindungsgemäßen Teigformmaschine die Formplatte lösbar auf einer Tragplatte auf, die mindestens einen Anschluss für die Verbindung mit der Saugpumpe aufweist. Dadurch kann diese bei einem Wechsel der Größe der herzustellenden Teigprodukte die Formplatte einfach gegen eine andere Formplatte ausgetauscht werden. Nach dem Wechsel müssen die Bohrungen wieder mit der Saugpumpe verbunden werden. Die kann auf verschiedene Art und Weise erfolgen.

Um den Anschluss an die Saugpumpe einfach und schnell nach einem Wechsel der Formplatte zu bewerkstelligen, weist gemäß eine bevorzugten Ausbildung der erfindungsgemäßen Teigformmaschine die Formplatte unterhalb der mindestens einen Vertiefung einen Hohlraum auf. Dieser steht mit der mindestens einen Bohrung in der mindesten einen Vertiefung in Fluidverbindung und ist nach außen auf einer Tragplatte aufliegend, luftdicht abgedichtet. Die Tragplatte weist mindestens einen Anschluss für die Verbindung mit der Saugpumpe auf. Dies kann praktischerweise durch mindestens eine Öffnung in der Tragplatte geschehen, die über eine Schlauchleitung mit der Saugpumpe verbunden ist. Da die Formplatte lösbar auf einer Tragplatte aufliegt und der Hohlraum nach außen luftdicht abgedichtet ist, ist nach dem Wechsel der Formplatte die neue Formplatte automatisch auch mit der Saugpumpe verbunden.

Mit dem erfindungsgemäßen Verfahren und der erfindungsgemäßen Teigformmaschine können somit kostengünstig und einfach die Backformen mit Teigmasse befüllt werden. Von besonderem Vorteil ist, dass die Teigformmaschine im Anschluss an eine automatisierte Teigausrollmaschine angeordnet werden kann, die Teigbahnen gewünschter Dicke und Länge automatisch bereitstellt. Diese sind dann lediglich auf die Teigformmaschine zu legen. Damit können schnell eine Vielzahl von Teigprodukten für den nachfolgenden Backvorgang zur Verfügung gestellt werden. Reparaturmöglichkeiten, wenn der Teigboden an einer Stelle aufreißt, sind durch Abdecken eines Teigstückes leicht möglich. Diese Tätigkeit kann von Hilfskräften ausgeführt werden, so dass für die Herstellung der Backwaren in diesem Bereich kein ausgebildeter Konditor erforderlich ist.

Die vorstehend in der Beschreibung genannten Merkmale und Merkmalskombinationen sind wie die nachfolgend in der Figurenbeschreibung genannten und/oder in den Figuren alleine gezeigten Merkmale und Merkmalskombination nicht nur in jeweils angegebenen Kombination, sondern auch in anderen Kombinationen oder in Alleinstellung verwendbar. Sämtliche aus den Ansprüchen, der Beschreibung und der Zeichnung hervorgehenden Merkmale und/oder Vorteile einschließlich konstruktive Einzelheiten und räumliche Anordnungen können sowohl für sich als auch an verschiedenen Kombinationen erfindungswesentlich sein.

Nachfolgend werden das Verfahren und die Teigformmaschine in Verbindung mit den prinzipiellen Figuren näher erläutert. Es stellen dar:
- Figur 1: eine schematische Darstellung einer Formplatte in der Draufsicht;
- Figur 2: eine Seitenansicht einer elastischen hitzebeständigen Backform mit einer den Vertiefungen entsprechend der Formplatte gemäß Figur 1;
- Figur 3: eine schematische Darstellung der Formplatte mit belegter Backform in der Draufsicht;
- Figur 4: eine schematische Teilschnittdarstellung durch die Formplatte mit einliegender Backform und aufliegender Teigmasse ohne Ansaugen (Figur 4A), in einem Zwischenstadium (Figur 4B) und nach dem Ansaugen vollständig in der Vertiefung einliegend(Figur 4C); und
- Figur 5: eine schematische prinzipielle Darstellung einer Teigformmaschine mit einer Ausstecheinrichtung in der Ausstechposition in einer Schnittdarstellung..

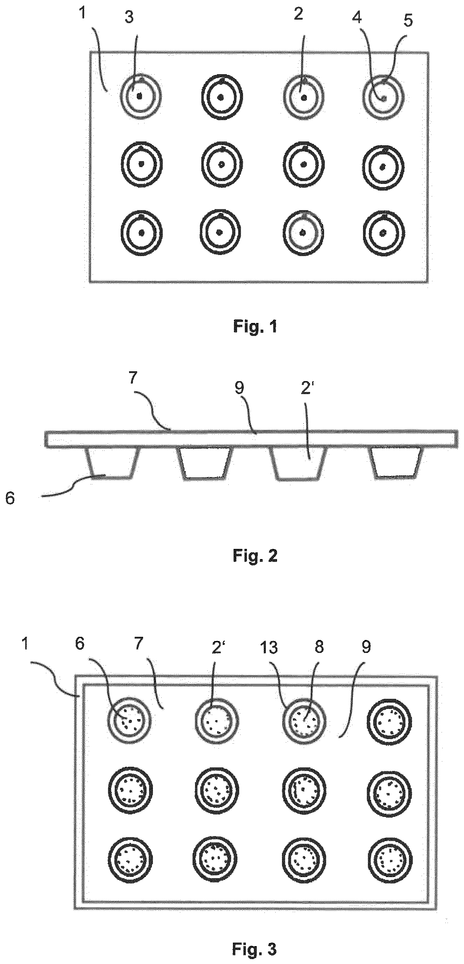

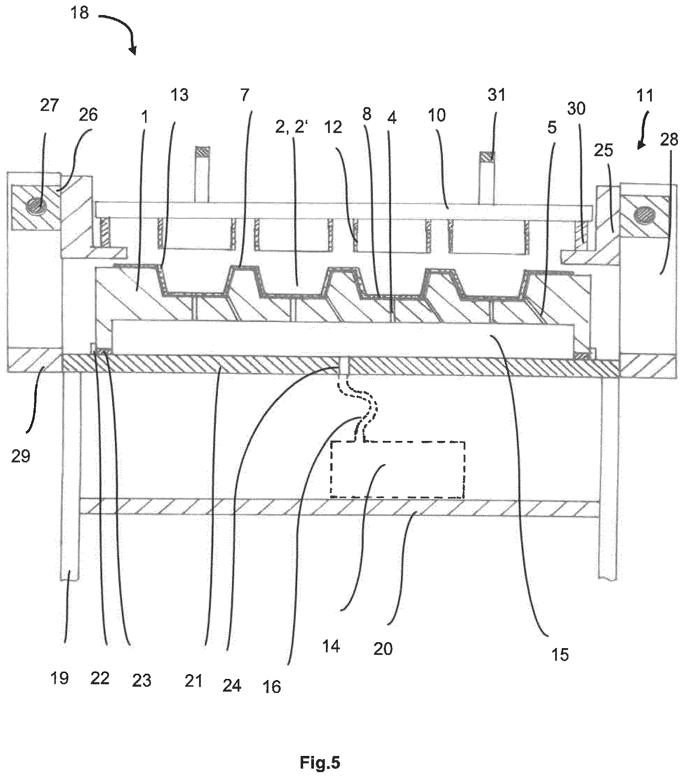

Die in der Figur 1 schematisch dargestellte Formplatte 1 weist Vertiefungen 2 auf, die am Boden 3 eine Bohrung 4 und am Rand 13 eine seitliche Bohrung 5 aufweisen, die alle mit einer in dieser Figur nicht dargestellten Saugpumpe 14 (Figur 5) über einen unter den Vertiefungen 2 befindlichen Hohlraum 15 (Figur 5) über eine ebenfalls nicht dargestellte Schlauchleitung 16 verbunden sind.

Figur 2 zeigt bezüglich der Dicke nicht maßstabsgetreu in der Seitenansicht eine Backform 7 aus einem elastischen hitzebeständigen Material, beispielsweise Silikon, die entsprechende Vertiefungen 2' aufweist. Die Oberfläche der Backform ist üblicherweise glatt, während die Unterseite zumindest im Bereich der Vertiefungen 2' rau ist. Die Backform 7 wird, wie in der Figur 3 dargestellt, mit ihren Vertiefungen 2' in die entsprechenden Vertiefungen 2 der Formplatte 1 eingelegt. Die Backform 7 weist in den Vertiefungen 2' am Boden 6 schematisch dargestellte Schlitze 8 auf, die aufgrund des flexiblen Materials der Backform 7 durch eine nicht dargestellte Teigmasse beim Ansaugen von Luft verschlossen werden. Wie aus der Figur 2 in Verbindung mit der Figur 3 ersichtlich, werden die Vertiefungen 2 in der Formplatte 1 durch die die Vertiefung 2' umgebenden Bereiche 9 abgedeckt, so und dass bei der Betätigung der Saugpumpe im Normalfall keine Luft seitlich vorbei entweichen kann. Gemäß dem Verfahren wird auf die Backform 7 eine flache Teigmasse ausreichender Konsistenz, Dicke und Luftundurchlässigkeit ausgebreitet, so dass die Vertiefungen 2' durch die Teigmasse abgedeckt werden. Durch betätigen der Saugpumpe nur wenige Sekunden wird die über den Vertiefungen 2' befindliche Teigmasse in die Vertiefungen 2' hineingezogen und die Form des - in diesem Ausführungsbeispiel - Törtchens ausgebildet. Für den Fall, das dennoch seitliche Luft entweicht, kann vor der Betätigung der Saugpumpe die gesamte Teigmasse einschließlich der Formplatte 1 mit einer luftundurchlässigen Folie überdeckt werden, die nach der Verformung der Teigmasse wieder entfernt wird.

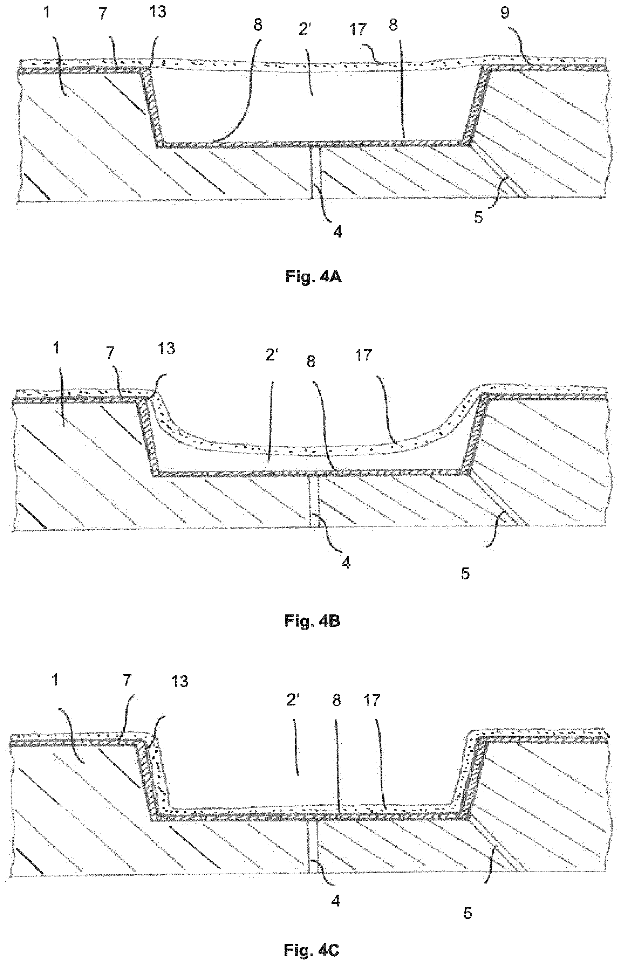

Figur 4 zeigt in der Schnittdarstellung beispielhaft verschiedene Stadien der Teigmasse 17 über der Vertiefung 2' in der elastischen Backform 7. In der Figur 4A ist die Teigmasse 17 frisch über die Vertiefung 2' gelegt, während in der Figur 4B bereits die Luft unterhalb der Teigmasse 17 in der Vertiefung 2' abgesaugt wird. Figur 4C schließlich zeigt die Teigmasse 17, wie sie vollständig in der Vertiefung 2' an deren Wänden anliegt und deren Form angenommen hat.

In der Figur 5 wird ein Ausführungsbeispiel einer Teigformmaschine 18 in einer prinzipiellen schematischen Schnittdarstellung dargestellt. Die Teigformmaschine 18 ist in Längsrichtung (senkrecht zum Querschnitt) symmetrisch aufgebaut. Auf einem Tragegestell 19 mit einer Zwischenplatte 20 befindet sich eine Tragplatte 21 auf der die Formplatte 1 angeordnet ist. Auf der Tragplatte 21 befinden sich Winkelanschläge 22 damit die austauschbare Formplatte 1 genau justiert auf der auf der Tragplatte 21 angeordneten umlaufenden Dichtung 23 zu stehen kommt. Die Formplatte 1 weist die Bohrungen 4, 5 auf, die mit einem Hohlraum 15 verbunden sind. Über diesen Hohlraum 15 werden alle Vertiefungen 2' gleichmäßig mittels der Saugpumpe 14 über die Schlauchleitung 16, die an die Bohrung 24 angeschlossen ist, evakuiert. Die Saugpumpe 14 sowie die Schlauchleitung 16 sind in der Figur nur gestrichelt schematisch angedeutet. Selbstverständlich ist die Saugleitung 16 an die Bohrung 24 druckbelastbar angeschlossen.

Oberhalb der Formplatte 1 mit der einliegenden elastischen Backform 7 (in dieser Darstellung ohne Teigmasse) befindet sich eine Ausstecheinrichtung 11. Die Ausstecheinrichtung 11 umfasst einen umlaufenden Tragrahmen 25, der über seitliche Halterungen 26 entlang Stangen 27 auf beiden Seiten als Linearführung verfahrbar ist. Die Stangen 27 sind in an beiden Enden der Teigformmaschine 1 angeordneten Tragelementen 28 gelagert, die in diesem Ausführungsbeispiel auf mit der Tragplatte 21 verbundenen Stützplatten 29 beidseitig angeordnet sind. Die Stützplatte 29 und in die Tragplatte 21 können auch einstückig ausgebildet sein. Der Tragrahmen 25 kann somit aus einer Beschickungsposition in der die Oberfläche der Formplatte 1 frei und gut zugänglich ist in die in der Figur dargestellte Ausstechposition verfahren werden. Zum Ausstechen weist die Ausstecheinrichtung 11 eine Ausstechplatte 10 auf, die über Schraubenfedern 30 auf dem Tragrahmen 25 in vertikaler Richtung beweglich gelagert ist und ringförmige Ausstechstempel 12 aufweist, mit denen die in den Vertiefungen 2' ein liegende Teigmasse um den Rand 13 ausgestochen werden kann. In dem Ausführungsbeispiel erfolgt die Betätigung der Ausstechplatte 10 bis auf die Backform 7 über die Handgriffe 31.

In dem Ausführungsbeispiel wurden runde Vertiefungen 2, 2' aufgrund des entsprechenden herzustellenden Gebäcks dargestellt. Selbstverständlich kann die Form des Gepäcks auch von der runden Form abweichen.

Bei dem Ausführungsbeispiel wird eine Formplatte 1 mit zwölf Runden Vertiefungen 2 für die Herstellung von kleinen Törtchen verwendet. Selbstverständlich ist die Formplatte 1 sowie die Backform 7 an die Form und die Anzahl der herzustellenden Teigprodukte anzupassen. Für den Fall, dass größere Formen, beispielsweise in der Größe von Tortenböden hergestellt werden sollen, sind die Ausnehmungen in der Formplatte 1 entsprechend zu ändern, so dass anstelle der Backform 7 übliche metallische Tortenbleche in eine entsprechend ausgebildete Formplatte eingelegt werden können. Die Tortenbleche sind entsprechend am umlaufenden Rand mit Luftdurchlässen für Saugluft versehen. Bei dieser Art der Herstellung ist auf jeden Fall eine Luft undurchlässige Folie nach dem Aufbringen der Teigmasse zu verwenden, da andernfalls kein Vakuum wegen Undichtigkeit zwischen der jeweiligen Backform und der entsprechenden Vertiefung in einer Formplatte entstehen kann.

Die im Ausführungsbeispiel dargestellte Teigformmaschine 18 ermöglicht somit den leichten Wechsel der Formplatte 1 aufgrund geänderter Abmessungen und Formen der Vertiefungen 2 und demzufolge auch den Vertiefungen 2' in der Backform 7. Entsprechend wird dazu eine geänderte Ausstechplatte 10 verwendet. Damit ist die Teigformmaschine 11 universell anpassbar und leicht umzurüsten, wenn die Formplatte 1, Backform 7 und Ausstechplatte 10 zur Verfügung stehen.

### Bezugszeichenliste

- 1: Formplatte
- 2, 2': Vertiefung
- 3: Boden
- 4: Bohrung
- 5: Bohrung
- 6: Boden
- 7: Backform
- 8: Schlitze
- 9: Bereiche
- 10: Ausstechplatte
- 11: Ausstecheinrichtung
- 12: Ausstechstempel
- 13: Rand
- 14: Saugpumpe
- 15: Hohlraum
- 16: Schlauchleitung
- 17: Teigmasse
- 18: Teigformmaschine
- 19: Tragegestell
- 20: Zwischenplatte
- 21: Tragplatte
- 22: Winkelanschläge
- 23: Dichtung
- 24: Bohrung
- 25: Tragrahmen
- 26: Halterung
- 27: Stange
- 28: Tragelement
- 29: Stützplatte
- 30: Schraubenfeder
- 31: Handgriff

## Patentansprüche

1. Verfahren zum Herstellen eines essbaren schalenförmigen rohen Teigprodukts mit einem Boden und einem Rand,
wobei eine flache Teigmasse (17) geeigneter Konsistenz und Dicke, die luftundurchlässig und elastisch verformbar ist, über eine Backform (7) mit mindestens einer der Form des schalenförmigen Teigprodukts entsprechenden Vertiefung (2') mit am Boden (6) befindlichen Luftdurchlässen (8) gelegt wird,
wobei die mindestens eine Vertiefung (2') weitgehend von oben luftdicht abgeschlossen wird,
wobei anschließend mittels einer Saugpumpe (14) die Teigmasse (17) in die mindestens eine Vertiefung (2') gesaugt wird, bis die Teigmasse (70) die mindestens eine Vertiefung (2') ausfüllt,
wobei danach die in der Vertiefung (2') der Backform (7) befindliche Teigmasse (70) von der überschüssigen Teigmasse (17) getrennt und entfernt und die Backform (7) zur Weiterverarbeitung in einem Backofen entnommen wird,
wobei eine Formplatte (1) mit mindestens einer Vertiefung (2), deren Form dem herzustellenden Teigprodukt entspricht, verwendet wird, und
wobei die mindestens eine Vertiefung (2) am Boden und/oder am Rand des Bodens mindestens eine Bohrung (4 bzw. 5) aufweist, die mit der Saugpumpe (14) verbunden ist.

2. Verfahren nach Anspruch 1, **dadurch gekennzeichnet, dass** eine Backform (7) mit einer der Anzahl der Vertiefungen (2') in der Formplatte (1) entsprechenden Vertiefungen (2) aus einem elastischen backfesten Material mit schlitzförmigen Luftdurchlässen (8) verwendet wird.

3. Verfahren nach einem der vorangegangenen Ansprüche, **dadurch gekennzeichnet, dass** für den luftdichten Abschluss nach dem Aufbringen der Teigmasse (17) eine luftdichte Folie über die Teigmasse (17) gelegt und nach der Verformung wieder entfernt wird.

4. Verfahren nach Anspruch 1, **dadurch gekennzeichnet, dass** in die mindestens eine Vertiefung (2) der Formplatte (1) als Backform eine metallische Backform mit Luftdurchlässen zumindest in der Randvertiefung eingelegt wird und nach dem Aufbringen der Teigmasse (17) eine luftundurchlässige Folie über die aufgebrachte Teigmasse (17) aufgelegt und nach der Verformung wieder entfernt wird.

5. Verfahren nach einem der vorangegangenen Ansprüche, **dadurch gekennzeichnet, dass** die in der mindestens einen Vertiefung (2') der jeweiligen Backform (1) befindliche Teigmasse (17) am Rand um die mindestens eine Vertiefung (2') ausgestochen wird.

6. Teigformmaschine, zum Durchführen eines Verfahrens nach einem der Ansprüche 1 bis 5, mit
- einer Formplatte (1) mit mindestens einer Vertiefung (2), deren Form dem herzustellenden Teigprodukt entspricht, wobei die mindestens eine Vertiefung (2) am Boden und/oder am Bodenrand mindestens eine Bohrung (4 bzw. 5) aufweist,
- einer Saugpumpe (14),
- einer Backform (7) mit mindestens einer der Form des Teigprodukts entsprechenden Vertiefung (2') mit am Boden (6) befindlichen Luftdurchlässen (8), und
- einer in vertikaler Richtung beweglichen Ausstecheinrichtung (11) mit mindestens einem ringförmigen Ausstechstempel (12), dessen Durchmesser größer ist als der Durchmesser der mindestens einen Vertiefung (2'), wobei Ausstechstempel (12) und Vertiefung (2') zueinander zentriert sind,
wobei die mindestens eine Vertiefung (2) der Formplatte (1) mit der Saugpumpe (14) verbunden ist, und
wobei die Backform (7) mit ihren Vertiefungen (2') in die entsprechenden Vertiefungen (2) der Formplatte (1) einlegbar ist.

7. Teigformmaschine nach Anspruch 6, **dadurch gekennzeichnet, dass** die Ausstecheinrichtung (11) horizontal über Linearführungen (27) von einer Beschickungsposition in eine Ausstechposition verfahrbar ist.

8. Teigformmaschine nach Anspruch 6 oder 7, **dadurch gekennzeichnet, dass** die Ausstechreinrichtung (11) einen Rahmen (25) aufweist, in dem eine austauschbare Ausstechplatte (10) mit den Ausstechstempel (12) auf der Unterseite in vertikaler Richtung federnd gelagert ist.

9. Teigformmaschine nach einem der vorangegangenen Ansprüche 6 bis 8, **dadurch gekennzeichnet, dass** die Formplatte (1) lösbar auf einer Tragplatte (21) aufliegt, die mindestens einen Anschluss (24) für die Verbindung mit der Saugpumpe (14) aufweist.

10. Teigformmaschine nach einem der vorangegangenen Ansprüche 6 bis 8, **dadurch gekennzeichnet, dass** die Formplatte (1) unterhalb der mindestens einen Vertiefung (2) einen Hohlraum aufweist, der mit der mindestens einen Bohrung (4 bzw. 5) in der Vertiefung (2) in Fluidverbindung steht und der nach außen luftdicht abgedichtet ist, wobei die Formplatte (1) lösbar auf einer Tragplatte (21) aufliegt, die mindestens einen Anschluss (24) für die Verbindung mit der Saugpumpe (14) aufweist,

## Claims

1. A method for producing an edible cup-shaped raw dough product having a bottom and a rim,
wherein a flat dough mass (17) of suitable consistency and thickness, which is impermeable to air and elastically deformable, is placed over a baking mold (7) having at least one depression (2') corresponding to the shape of the cup-shaped dough product with air passages (8) located at the bottom (6),
wherein the at least one depression (2') is largely sealed airtight from above,
wherein the dough mass (17) is then sucked into the at least one depression (2') by means of a suction pump (14) until the dough mass (70) fills the at least one depression (2'),
wherein the dough mass (70) located in the depression (2') of the baking mold (7) is then separated from the excess dough mass (17) and removed and the baking mold (7) is removed for further processing in an oven,
wherein a forming plate (1) with at least one depression (2), the shape of which corresponds to the dough product to be produced, is used, and
wherein the at least one depression (2) has at least one bore (4 or 5) at the bottom and/or at the rim of the bottom, which is connected to the suction pump (14).

2. The method according to claim 1, **characterized in that** a baking mold (7) with a number of depressions (2) corresponding to the number of depressions (2') in the forming plate (1) and made of an elastic baking-resistant material with slit-shaped air passages (8) is used.

3. The method according to any one of the preceding claims, **characterized in that** an airtight film is placed over the dough mass (17) for the airtight seal after the dough mass (17) has been applied and is removed again after shaping.

4. The method according to claim 1, **characterized in that** a metal baking mold with air passages at least in the rim recess is inserted into the at least one depression (2) of the forming plate (1) as a baking mold and, after the application of the dough mass (17), an air-impermeable film is placed over the applied dough mass (17) and removed again after shaping.

5. The method according to any one of the preceding claims, **characterized in that** the dough mass (17) located in the at least one depression (2') of the respective baking mold (1) is cut out at the rim around the at least one depression (2').

6. A dough forming machine for carrying out a method according to any one of claims 1 to 5, comprising
- a forming plate (1) with at least one depression (2), the shape of which corresponds to the dough product to be produced, wherein the at least one depression (2) has at least one bore (4 or 5) at the bottom and/or at the rim of the bottom,
- a suction pump (14),
- a baking mold (7) with at least one depression (2') corresponding to the shape of the dough product with air passages (8) located at the bottom (6), and
- a vertically movable cutting device (11) with at least one annular cutting punch (12), the diameter of which is larger than the diameter of the at least one depression (2'),
wherein the punch (12) and the depression (2') are centered in relation to one another,
wherein the at least one depression (2) of the forming plate (1) is connected to the suction pump (14), and
wherein the baking mold (7) is insertable with its depressions (2') into the corresponding depressions (2) of the forming plate (1).

7. The dough forming machine according to claim 6, **characterized in that** the cutting device (11) can be moved horizontally via linear guides (27) from a loading position to a cutting position.

8. The dough forming machine according to claim 6 or 7, **characterized in that** the cutter device (11) has a frame (25) in which an exchangeable cutter plate (10) with the cutter punch (12) on the underside is in the vertical direction resiliently mounted.

9. The dough forming machine according to any one of the preceding claims 6 to 8, **characterized in that** the forming plate (1) rests detachably on a support plate (21) which has at least one connection (24) for connection to the suction pump (14).

10. The dough forming machine according to any one of the preceding claims 6 to 8, **characterized in that** the forming plate (1) has a cavity below the at least one depression (2), which cavity is in fluid communication with the at least one bore (4 or 5) in the depression (2) and which is sealed airtightly to the outside, the forming plate (1) resting detachably on a support plate (21) which has at least one connection (24) for connection to the suction pump (14).

## Revendications

1. Procédé de fabrication d'un produit pâteux cru comestible, en forme de coupelle et comportant une base et un bord,
une quantité de pâte plate (17) de consistance et d'épaisseur appropriées, imperméable à l'air et élastiquement déformable, étant posée par-dessus un moule de cuisson (7) pourvu d'au moins un ceux (2') qui correspond à la forme du produit pâteux en forme de coupelle et qui comprend des passages d'air (8) situés au niveau du fond (6),
l'au moins un creux (2') étant fermé dans une large mesure depuis le haut de manière étanche à l'air,
la quantité de pâte (17) étant ensuite aspirée dans au moins un creux (2') au moyen d'une pompe aspirante (14) jusqu'à ce que la quantité de pâte (70) remplisse l'au moins un creux (2'),
la quantité de pâte (70) située dans le creux (2') du moule de cuisson (7) étant ensuite séparée et retirée de la quantité de pâte en excès (17) et le moule de cuisson (7) étant retiré en vue d'un traitement ultérieur dans un four de cuisson,
une plaque de moule (1) étant utilisée qui comprend au moins un creux (2) dont la forme correspond au produit pâteux à fabriquer, et
l'au moins un creux (2) au niveau du fond et/ou du bord du fond comportant au moins un perçage (4 ou 5) qui est relié à la pompe d'aspiration (14).

2. Procédé selon la revendication 1, **caractérisé en ce qu'**un moule de cuisson (7) est utilisé qui comprend un creux (2) qui correspond au nombre de creux (2') dans la plaque de moule (1) en une matière élastique résistant à la cuisson et pourvue de passages d'air (8) en forme de fente.

3. Procédé selon l'une des revendications précédentes, **caractérisé en ce que**, pour effectuer la fermeture de manière étanche à l'air après application de la quantité de pâte (17), un film étanche à l'air est placé sur la quantité de pâte (17) et à nouveau retiré après la déformation.

4. Procédé selon la revendication 1, **caractérisé en ce qu'**un moule de cuisson métallique pourvu de passages d'air au moins dans le creux en bordure est inséré dans l'au moins un creux (2) de la plaque de moule (1) en tant que moule de cuisson et, après l'application de la quantité de pâte (17), un film étanche à l'air est placé par-dessus la quantité de pâte appliquée (17) et à nouveau retirée après la déformation.

5. Procédé selon l'une des revendications précédentes, **caractérisé en ce que** la quantité de pâte (17) située dans l'au moins un creux (2') du moule de cuisson (1) respectif est découpée au niveau du bord autour de l'au moins un creux (2').

6. Machine de moulage de pâte destinée à la mise en oeuvre d'un procédé selon l'une des revendications 1 à 5, ladite machine comprenant
- une plaque de moule (1) comprenant au moins un creux (2) dont la forme correspond au produit pâteux à fabriquer, l'au moins un creux (2) comportant au moins un perçage (4 ou 5) au niveau du fond et/ou du bord de fond,
- une pompe aspirante (14),
- un moule de cuisson (7) comprenant au moins un creux (2') qui correspond à la forme du produit pâteux et qui est pourvu de passages d'air (8) situés au niveau du fond (6), et
- un dispositif de découpe (11) mobile dans la direction verticale et pourvu d'au moins un poinçon de découpe annulaire (12) dont le diamètre est supérieur au diamètre de l'au moins un creux (2'), le poinçon de découpe (12) et le creux (2') étant centrés l'un par rapport à l'autre,
l'au moins un creux (2) de la plaque de moule (1) étant relié à la pompe aspirante (14), et
le moule de cuisson (7) pourvu de ses creux (2') pouvant être inséré dans les creux correspondants (2) de la plaque de moule (1).

7. Machine de moulage de pâte selon la revendication 6, **caractérisée en ce que** le dispositif de découpe (11) est déplaçable horizontalement par le biais de guides linéaires (27) depuis une position de chargement jusque dans une position de découpe.

8. Machine de moulage de pâte selon la revendication 6 ou 7, **caractérisée en ce que** le dispositif de découpe (11) comporte un cadre (25) dans lequel une plaque de découpe interchangeable (10) pourvue du poinçon de découpe (12) est montée élastiquement dans la direction verticale sur le côté inférieur.

9. Machine de moulage de pâte selon l'une des revendications précédentes 6 à 8, **caractérisée en ce que** la plaque de moulage (1) vient en appui de manière amovible sur une plaque de support (21) qui comporte au moins un raccord (24) destiné au raccordement à la pompe aspirante (14).

10. Machine de moulage de pâte selon l'une des revendications précédentes 6 à 8, **caractérisée en ce que** la plaque de moulage (1) comporte au-dessous de l'au moins un creux (2) une cavité qui est en communication fluidique avec l'au moins un perçage (4 ou 5) dans le creux (2) et qui est lutée de manière étanche à l'air par rapport à l'extérieur, la plaque de moulage (1) venant en appui de manière amovible sur une plaque de support (21) qui comporte au moins un raccord (24) destiné au raccordement à la pompe aspirante (14).
